# FASCICULE DE BREVET EUROPEEN

(11) **EP 1 502 811 B1**
(45) Date de publication et mention de la délivrance du brevet: **01.03.2017**
(21) Numéro de dépôt: 04364053.1
(22) Date de dépôt: 20.07.2004
(51) Int. Cl.: B60P 1/28

(54) **Dispositif de montage d'une benne sur un châssis et camion muni de celui-ci**
Montagevorrichtung für einen Behälter auf einem Fahrzeugrahmen und Kipp-Lastwagen mit solcher Vorrichtung
Device for mounting a dump bucket on a vehicle frame and lorry comprising said device

(30) Priorité: 21.07.2003 FR 0308872
(43) Date de publication de la demande: 02.02.2005
(73) Titulaire: C.I. 85, 85140 Les Essarts (FR)
(72) Inventeur: Sauvion, Jean-Pierre, 85260 L'Herbergement (FR); Moinat, Raymond, 1117 Crancy (CH)
(74) Mandataire: Chaillot, Geneviève

(56) Documents cités:
- EP-A- 1 162 110
- FR-A- 1 070 686
- GB-A- 648 442
- US-A- 1 509 875
- US-A- 4 412 699
- US-A- 5 836 657
- US-B1- 6 196 634
- US-B1- 6 409 275

## Description

L'invention concerne un dispositif de montage d'une benne sur un châssis roulant, ainsi qu'un camion comportant ce dispositif de montage.

Un domaine d'application de l'invention est notamment les véhicules ou camions à benne, les semi-remorques à bennes, les remorques à bennes, pour le transport de matériaux divers, granulaires ou sous la forme de blocs (enrochements).

La benne est habituellement montée basculante sur une articulation pour pouvoir passer de la position abaissée à une position levée, permettant par exemple son vidage, grâce à des moyens de levage.

Un faux-châssis est intercalé entre le châssis et la benne.

En position abaissée, par exemple pour le transport, la benne repose sur ce faux-châssis.

Ce faux-châssis doit donc avoir une structure lui permettant de supporter le poids de la benne remplie de la charge utile de matériau, de par exemple 20 tonnes.

Ainsi, le faux-châssis est massif et est habituellement constitué d'un assemblage de poutres longitudinales, continues et transversales, cet assemblage étant fixé sur le châssis.

Il en résulte l'inconvénient d'un poids excessif du faux-châssis, qui s'inscrit en général dans une fourchette allant de 300 à 1000 daN environ.

Le document US-A-1 509 875 décrit un dispositif selon le préambule de la revendication 1.

L'invention vise à obtenir un dispositif de montage d'une benne qui soit optimisé et résolve les inconvénients de l'état de la technique.

A cet effet, un premier objet de l'invention est un dispositif de montage d'une benne sur un châssis roulant selon la revendication 1.

Grâce à l'invention, on conserve les fonctions du faux-châssis tout en l'allégeant et en réalisant une économie de matériaux entre ses éléments avant et arrière.

Les revendications 2 à 21 concernent d'autres caractéristiques de l'invention.

Un deuxième objet de l'invention est un camion à benne basculante, châssis roulant et dispositif de montage de la benne sur le châssis suivant l'une quelconque des revendications précédentes.

L'invention sera mieux comprise à la lecture de la description qui va suivre, donnée uniquement à titre d'exemple non limitatif en référence aux dessins annexés, sur lesquels :
- la figure 1 représente schématiquement un camion à benne vu de profil du côté gauche et benne abaissée, dans lequel peut être utilisé l'invention suivant des premier à cinquièmes modes de réalisation,
- la figure 2 représente schématiquement en vue de dessus, le faux-châssis du premier mode de réalisation de l'invention ;
- la figure 3 représente schématiquement en vue de dessus, le montage de la benne dans le premier mode de réalisation de l'invention ;
- la figure 4 représente schématiquement en vue de dessus, le faux-châssis du deuxième mode de réalisation de l'invention ;
- la figure 5 représente schématiquement en vue de dessus, le montage de la benne dans le deuxième mode de réalisation de l'invention ;
- la figure 6 représente schématiquement en vue de dessus, le faux-châssis dans une variante des premier et deuxième modes de réalisation de l'invention ;
- la figure 7 représente schématiquement en vue de dessus, le faux-châssis du troisième mode de réalisation de l'invention ;
- la figure 8 représente schématiquement en vue de dessus, le montage de la benne dans le troisième mode de réalisation de l'invention ;
- la figure 9 représente schématiquement en vue de dessus, le faux-châssis du quatrième mode de réalisation de l'invention ;
- la figure 10 représente schématiquement en vue de dessus, le montage de la benne dans le quatrième mode de réalisation de l'invention ;
- la figure 11 représente schématiquement en perspective, le faux-châssis dans le quatrième mode de réalisation de l'invention ;
- la figure 12 représente schématiquement en perspective, l'élément avant du faux-châssis dans le quatrième mode de réalisation de l'invention ;
- la figure 13 représente schématiquement en vue de dessus, le faux-châssis du cinquième mode de réalisation de l'invention et
- la figure 14 représente schématiquement en vue de dessus, le montage de la benne dans le cinquième mode de réalisation de l'invention.

Aux figures, la direction longitudinale et horizontale de l'arrière vers l'avant porte la référence X, la direction transversale et horizontale de la droite vers la gauche porte la référence Y et la direction verticale ascendante, orthonormale aux deux précédentes, porte la référence Z.

On va d'abord décrire l'invention ci-dessous pour une benne basculant d'avant en arrière et vice versa, appelée ci-dessous benne à basculement arrière simple.

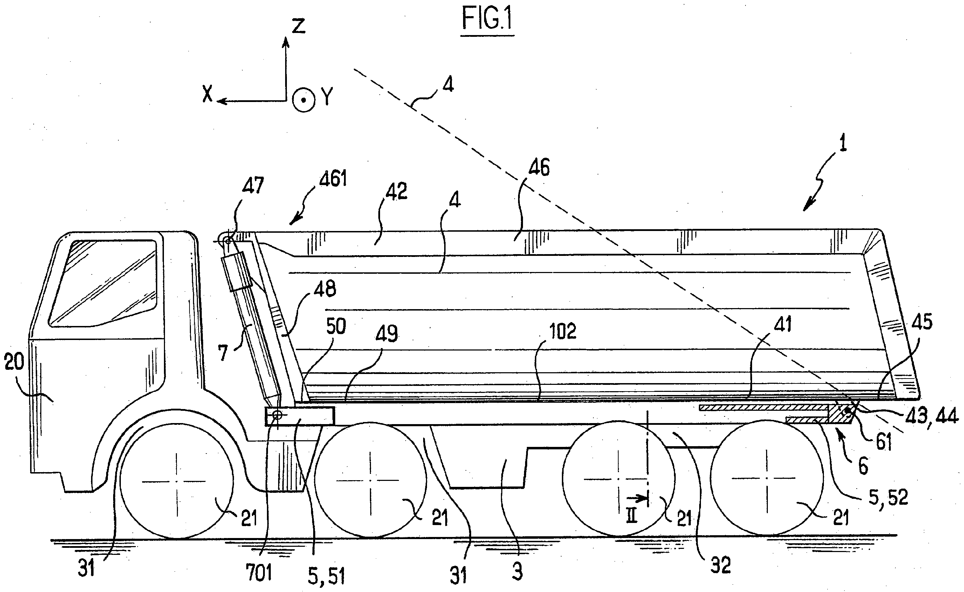

A la figure 1, un camion-benne 1 comporte une cabine avant 20, un châssis 3 roulant sur le sol par des roues 21 supportées par des essieux avant 31 et arrière 32, et une benne 4 ayant par exemple une forme semi-cylindrique circulaire de l'avant à l'arrière. Bien entendu, le dispositif de montage de la benne peut être prévu sur tout type de véhicule.

Un faux-châssis 5 de support de la benne 4 est monté sur la surface supérieure du châssis 3. La benne 4 est montée basculante par une articulation 6 sur le faux-châssis 5. A la figure 1, la benne 4 se trouve dans une position abaissée dans laquelle elle repose par une surface de contact inférieure 41 sur le faux-châssis 5 et a sa surface inférieure 41 sensiblement à l'horizontale pour le déplacement du camion et le transport de matériaux dans la benne 4. Aux figures, les termes avant et arrière s'entendent dans la position abaissée de la benne.

Dans le cas de la benne 4 à basculement arrière simple, l'articulation 6 est prévue à l'arrière du faux-chasssis 5 et de la benne 4 et est formée par un axe 61 de rotation parallèle à la direction transversale Y. La benne 4 à basculement arrière simple peut, par des moyens appropriés, être levée par rotation autour de son articulation 6 à partir de la position abaissée pour passer à une position haute de sa partie avant 42, afin de permettre le vidage des matériaux contenus dans la benne derrière le camion 1, cette position haute étant représentée par des traits interrompus à la figure 1 pour le bas de la benne 4.

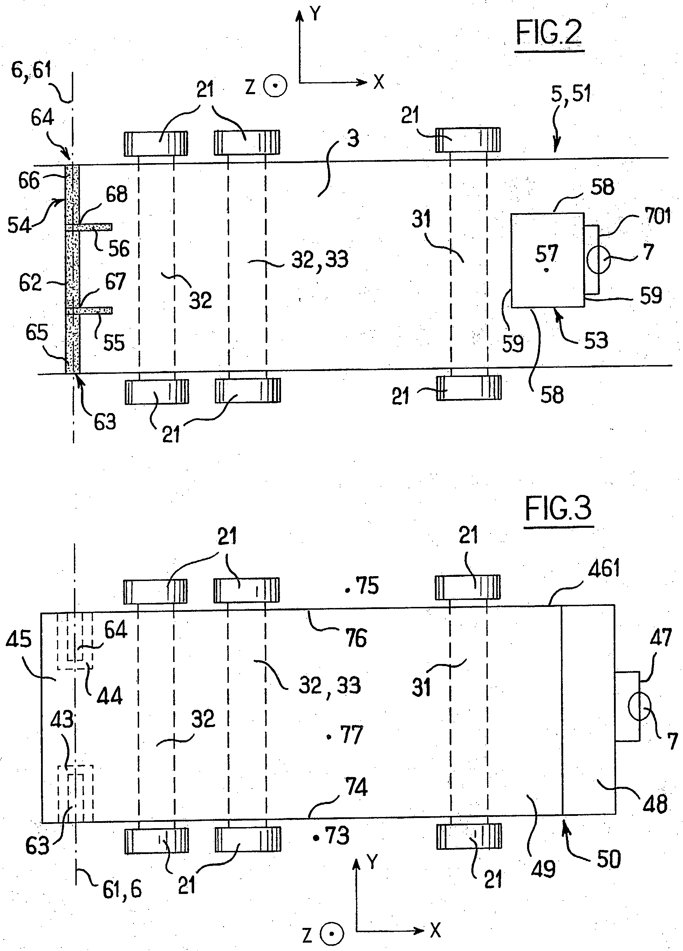

Dans un premier mode de réalisation représenté aux figures 2 et 3, le faux-châssis 5 est constitué d'un premier élément avant 51 et d'un deuxième élément arrière 52 de faux-châssis, se trouvant à distance du premier élément 51.

D'une manière générale dans les modes de réalisation représentés aux figures, les éléments de faux-châssis sont distincts de l'articulation 6, que cette articulation 6 soit arrière ou latérale.

Le premier élément avant 51 de faux-châssis sert au repos d'une partie avant 49 de la benne 4 en position abaissée. Le deuxième élément arrière 52 de faux-châssis sert au support d'une partie arrière 45 de la benne 4.

D'une manière générale dans les modes de réalisation représentés aux figures, les éléments de faux-châssis sont aptes à supporter à eux seuls le poids de la benne et de son contenu et offrent à celle-ci un appui réparti sur une surface étendue de la partie supérieure des éléments de faux-châssis. Cette surface d'appui est par exemple sensiblement plane, et parallèle à la surface inférieure de la benne, par laquelle celle-ci repose sur les éléments de faux-châssis en position abaissée.

Des premiers moyens 53 de fixation du premier élément 51 avant de faux-châssis au châssis 3 et des deuxièmes moyens 54 de fixation du deuxième élément 52 arrière de faux-châssis au châssis 3, indépendants des premiers moyens 53 de fixation y sont prévus. Ces premiers et deuxièmes moyens 53, 54 de fixation sont par exemple formés chacun par des boulonnages.

L'axe 61 de rotation est formé sur un tube transversal creux 62 de l'élément arrière 52 par deux axes 63 et 64 transversaux droit et gauche, qui sont engagés à rotation dans les deux extrémités droite et gauche 65, 66 du tube 62 et qui sont solidaires de deux doigts 43 et 44 droit et gauche fixés sous la partie arrière basse 45 de la benne 4. En outre, l'élément arrière 52 comporte deux tronçons longitudinaux 55, 56, qui sont dirigés vers l'avant et qui sont fixés au tube 62 et traversés par celui-ci en deux endroits 67, 68 du tube 62 situés entre le milieu transversal du tube 62 et ses extrémités 65, 66.

L'élément avant 51 est formé par une plaque 57 médiane sensiblement horizontale et rectangulaire de côtés longitudinaux et transversaux, les deux côtés longitudinaux 58 étant par exemple moins longs que les deux côtés transversaux 59.

Les éléments 51 et 52 sont agencés de la manière suivante.

En position abaissée, la benne 4 repose par sa surface inférieure 41 sur les tronçons 55 et 56 et les deux extrémités droite et gauche 65, 66 du tube 62 de l'élément arrière 52 et sur la plaque 57 de l'élément avant 51, par exemple sur ses deux côtés longitudinaux 58 droit et gauche. En position abaissée, mis à part l'axe 6, la benne ne touche par exemple que les tronçons précités 55 et 56 de l'élément 52 et les côtés 58 de l'élément 51.

Aux figures 1, 2 et 3, les moyens de levage de la benne 4 par rapport au faux-châssis 5 sont frontaux et par exemple formés par un vérin 7 articulé d'une part à l'élément avant 51, et d'autre part à la partie supérieure avant 461 de la benne 4.

Dans l'exemple représenté, le vérin 7 est articulé d'une part au milieu transversal avant de la plaque 57 et d'autre part au milieu transversal d'une traverse 47 supérieure avant de la benne 4 située devant sa paroi avant 48 délimitant le compartiment intérieur 77 de la benne destiné à contenir les matériaux. L'élément avant 51 est positionné sous l'extrémité inférieure avant 50 de la benne 4, formée par le bas de sa paroi avant 48, et l'axe d'articulation 701 du vérin 7 à l'élément avant 51 est positionné devant cette extrémité inférieure 50.

Lorsque le vérin 7 est actionné depuis la position abaissée, la benne tourne vers l'arrière autour de l'axe 61 de rotation par rapport à l'élément arrière 52 pour passer en position haute, la partie inférieure avant 49 de la surface inférieure de contact 41 de la benne 4 est soulevée de l'élément avant 51, et la partie arrière basse 45 de la surface inférieure de contact 41 de la benne 4 est soulevée des tronçons 55 et 56, la partie arrière 45 de la benne 4 ne reposant plus que par les axes 63 et 64 sur l'élément arrière 52. Bien entendu, la benne 4 peut passer de la position haute à la position abaissée par un actionnement en sens inverse du vérin 7.

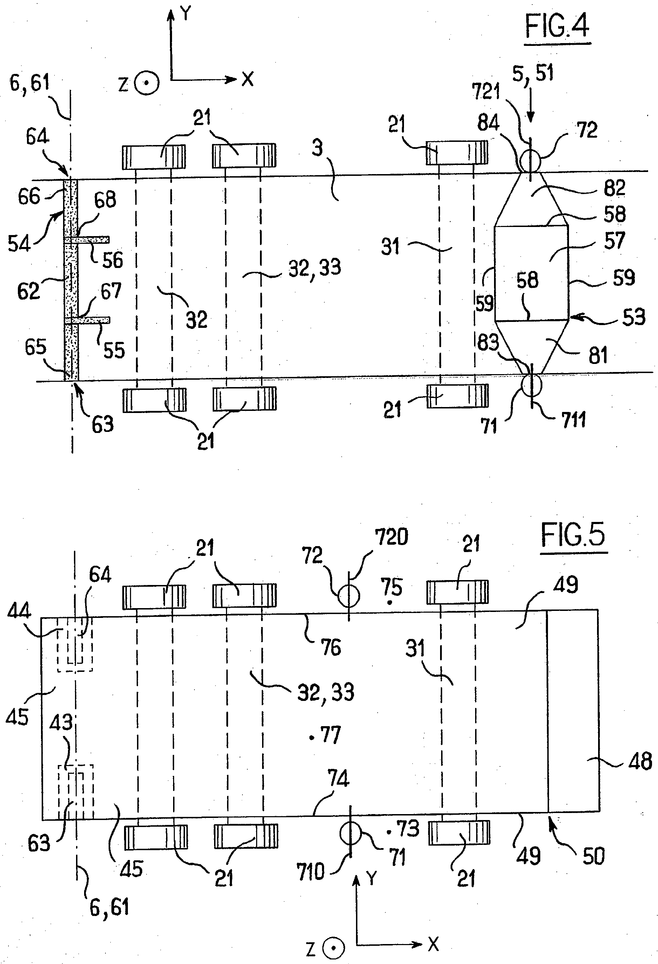

Dans un deuxième mode de réalisation représenté aux figure 4 et 5, qui est une variante du premier mode de réalisation, les moyens de levage et d'abaissement sont supportés sur deux côtés opposés droit et gauche du premier élément avant 51 de faux-châssis.

L'élément avant 51 comprend, en plus de la planque 57, deux parties 81 et 82 droite et gauche solidaires respectivement des deux côtés longitudinaux 58 droit et gauche de la plaque 57. Ces parties 81 et 82 sont par exemple trapézoïdales et isocèles et prolongent par leur grande base chacune les deux côtés longitudinaux 58 droit et gauche de la plaque 57 et forment les extrémités droite et gauche 83, 84 de l'élément 51 par leur petite base. Plus généralement, en étant trapézoïdales ou non, les parties 81 et 82 vont en se rétrécissant de la plaque 57 vers les extrémités 83 et 84, afin de gagner en matière de faux-châssis et en poids de celui-ci, tout en ayant une structure optimisée pour le levage, l'abaissement et le soutien de la benne 4.

Aux figures 4 et 5, les moyens de levage de la benne 4 par rapport au faux-châssis 5 sont latéraux et par exemple formés par un premier vérin 71 de droite articulé d'une part à la partie 81 de droite de l'élément avant 51, par exemple à son extrémité 83 de droite, et d'autre part à la partie supérieure 46 de la benne 4, et par un deuxième vérin 72 de gauche articulé d'une part à la partie 82 de gauche de l'élément avant 51, par exemple à son extrémité 84 de gauche et d'autre part à la partie supérieure 46 de la benne 4.

Par exemple, le premier vérin 71 de droite est articulé sur le côté 73 de droite de la benne 4, à droite de sa paroi 74 de droite, délimitant le compartiment intérieur 77 de la benne 4, destiné à contenir les matériaux, et le deuxième vérin 72 de gauche est articulé sur le côté 75 de gauche de la benne 4, à gauche de sa paroi 76 de gauche, délimitant le compartiment intérieur de la benne 4, destiné à contenir les matériaux. Les axes d'articulation 710 et 720 des premier et deuxièmes vérins 71 et 72 à la benne 4 sont par exemple positionnés sur celle-ci, de manière à être situés, en position abaissée de la benne 4, devant le ou les essieux 32 arrière du châssis 3, c'est-à-dire devant l'essieu arrière 33 situé le plus en avant, le ou les essieux arrière 32 pouvant être définis dans ce cas comme étant séparés du ou des essieux avant 31 par une distance longitudinale, qui est plus grande que celle séparant les essieux avant 31 entre eux lorsque plusieurs essieux avant 31 sont prévus ainsi que représenté à la figure 1 et qui est plus grande que celle séparant les essieux arrière 32 entre eux lorsque plusieurs essieux arrière 32 sont prévus ainsi que représenté à la figure 1. Les axes d'articulation 711 et 721 des premier et deuxièmes vérins 71 et 72 à l'élément avant 51 et, plus généralement l'élément avant 51 dans tous les modes de réalisation, sont par exemple positionnés sur celui-ci devant le ou les essieux 32 arrière du châssis 3, c'est-à-dire devant l'essieu arrière 33 situé le plus en avant, et par exemple au moins de 1000 millimètres devant ceux-ci.

Les axes d'articulation 711, 721 d'une part et 710, 720 d'autre part des premier et deuxièmes vérins 71 et 72 à l'élément avant 51 et à la benne 4 sont par exemple alignés transversalement pour un déplacement des vérins 71 et 72 dans un plan longitudinal sensiblement vertical lors du levage et de l'abaissement de la benne, ainsi que cela est représenté. Les axes d'articulation des premier et deuxièmes vérins 71 et 72 à l'élément avant 51 et à la benne 4 peuvent également être non alignés transversalement et les extrémités des vérins 71 et 72, situées à proximité de ces axes peuvent être décalés transversalement, pour un déplacement des vérins 71 et 72 dans un plan incliné par rapport au plan longitudinal vertical lors du levage et de l'abaissement de la benne, par exemple pour que les axes 711 et 721 soient plus écartés l'un de l'autre que les axes 710.

L'élément avant 51, de même que les axes 711, 721 d'articulation des premier et deuxièmes vérins 71 et 72 à l'élément avant 51, est par exemple positionné sous l'extrémité inférieure avant 50 de la benne 4, formée par le bas de sa paroi avant 48.

Le fait que dans le deuxième mode de réalisation, il soit prévu deux vérins latéraux 71 et 72 permet de diminuer la force devant être exercée par chaque vérin pour soulever la benne 4, par rapport aux dispositifs classiques connus qui poussent sous le milieu longitudinal et transversal de la benne ainsi que cela est décrit ci-dessous pour le troisième mode de réalisation ou qui poussent, ainsi que cela est décrit dans le document EP-A-1 162 110, sur les côtés supérieurs droit et gauche de la benne à partir de deux vérins droit et gauche prenant appui entre les deux essieux arrière. Ainsi, pour ce dispositif à deux vérins selon le document EP-A-1 162 110, qui nécessite une poussée de 85 tonnes de chaque vérin, le deuxième mode de réalisation ne nécessite qu'une poussée de 40 tonnes de chaque vérin pour soulever la benne.

En outre, par rapport aux dispositifs classiques connus qui poussent la benne dans un plan longitudinal médian, soit sous le milieu longitudinal et transversal de la benne, soit au milieu d'une traverse supérieure avant de la benne, le deuxième mode de réalisation permet d'empêcher un vrillage et une déformation de la benne au cours de son levage ou de son abaissement.

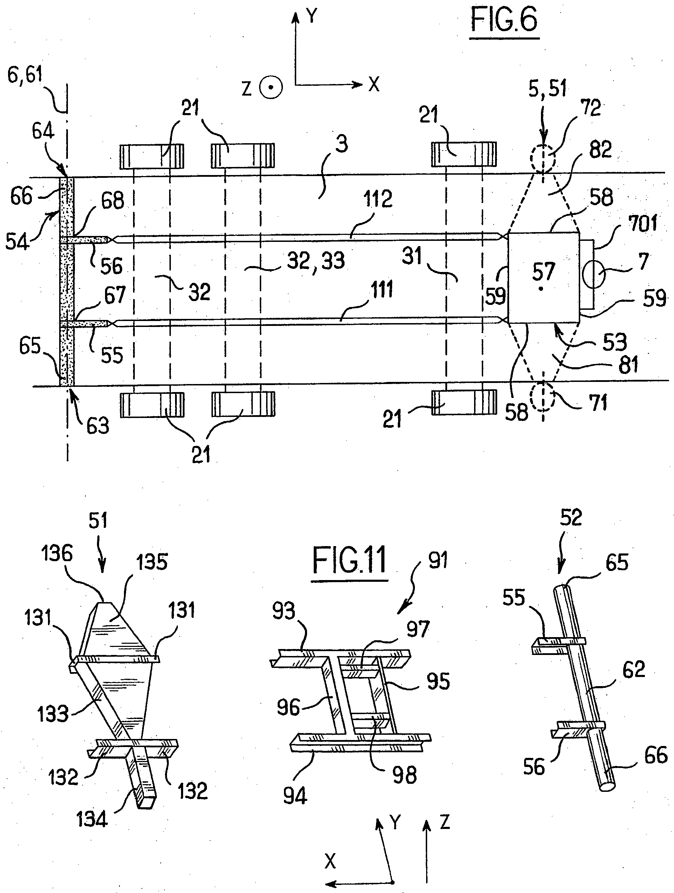

Dans une variante des premier et deuxième modes de réalisation, représentée à la figure 6, les éléments avant et arrière 51 et 52 sont aptes à être reliés entre eux longitudinalement par des moyens de liaison pour aider au maintien de la distance entre l'élément avant 51 et l'élément arrière 52 soumis au poids de la benne et de son contenu et aux efforts de levage et d'abaissement. Les parties 81, 82 et vérins 71, 72 sont représentés en pointillés à la figure 6 dans le cas du deuxième mode de réalisation, et le vérin 7 et l'axe 701 sont représentés en traits pleins à la figure 6 dans le cas du premier mode de réalisation.

Ces moyens de liaison sont tels qu'ils ne sont pas touchés par la benne 4 lorsqu'on l'abaisse sur l'élément avant 51. Ces moyens de liaison sont amovibles, sont montés sur l'élément avant 51 et l'élément arrière 52 pour lever ou abaisser la benne 4 et sont enlevés de l'élément avant 51 et de l'élément arrière 52 en position abaissée de transport de la benne 4, ce qui permet d'alléger le poids supporté par les éléments de faux-châssis.

Ces moyens de liaison sont par exemple formés par deux longerons amovibles 111 et 112 droit et gauche dont les extrémités peuvent être fixées aux éléments 51 et 52 à droite et à gauche, par exemple aux tronçons 55 et 56 et aux côtés 58 droit et gauche de l'élément 51, ou enlevées de ceux-ci, cette possibilité de fixation et d'enlèvement étant figurée par des croix à la figure 6.

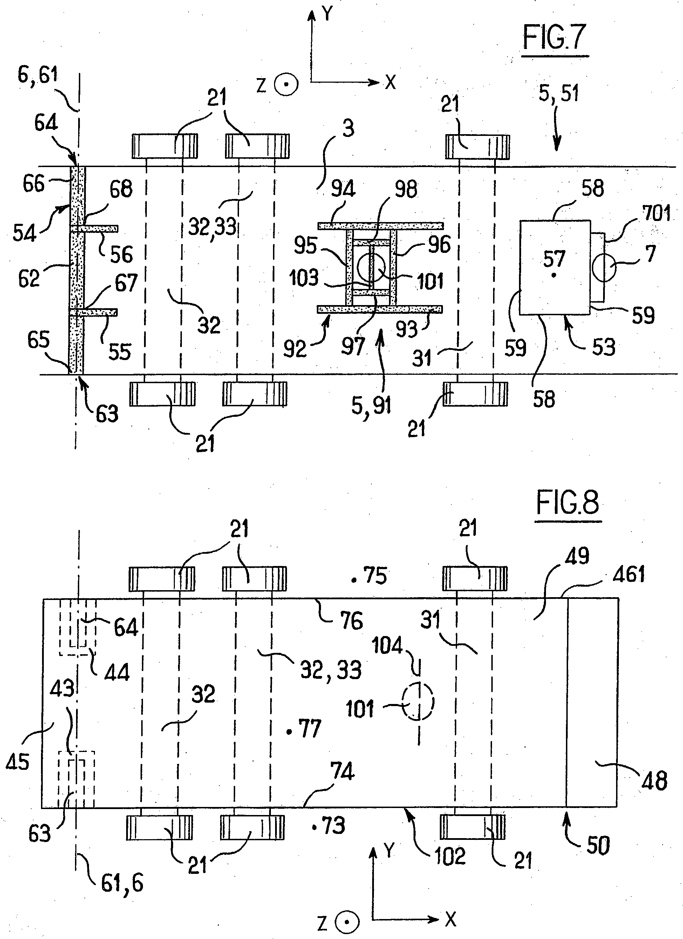

Dans un troisième mode de réalisation représenté aux figures 7 et 8, qui est une variante du premier mode de réalisation, le faux-châssis 5 est constitué du premier élément avant 51, du deuxième élément arrière 52 faux-châssis et d'un troisième élément intermédiaire 91 de faux-châssis: se trouvant longitudinalement entre le premier élément avant 51 de faux-châssis et à distance de ceux-ci. Des troisièmes moyens 92 de fixation du troisième élément intermédiaire 91 de faux-châssis au châssis, indépendants des premiers moyens 53 de fixation et des deuxièmes moyens 54 de fixation sont prévus. Ces troisièmes moyens 92 de fixation sont par exemple formés par des boulonnages.

L'élément intermédiaire 91 de faux-châssis supporte les moyens de levage et d'abaissement de la benne par rapport à son articulation 6.

L'élément avant 51 est formé par une plaque 57 sensiblement horizontale et rectangulaire de côtés longitudinaux et transversaux, les deux côtés longitudinaux 58 étant par exemple moins longs que les deux côtés transversaux 59.

L'élément intermédiaire 91 comporte deux tronçons intermédiaires longitudinaux 93 et 94 droit et gauche, par exemple alignés avec les tronçons 55 et 56 de l'élément 52 et les deux côtés longitudinaux 58 droit et gauche de l'élément 51 et à distance de ceux-ci. Ces deux tronçons intermédiaires 93 et 94 sont reliés entre eux par deux traverses 95 et 96, elles-mêmes reliées entre elles par deux poutres longitudinales 97 et 98 situées entre les tronçons 93 et 94. Les poutres 97 et 98 et/ou les traverses 95 et 96 supportent entre elles les moyens de levage et d'abaissement.

Les moyens de levage et d'abaissement sont formés par exemple par un vérin 101 articulé d'une part à l'élément intermédiaire 91 par un axe 103, par exemple entre les poutres 97 et 98, et d'autre part par un axe 104 à la partie inférieure 102 de la benne 4 par exemple en son milieu transversal et entre ses parties avant 49 et arrière 45, tel qu'à proximité du milieu longitudinal et transversal de la partie inférieure 102, un espace de logement du vérin 101 étant prévu entre l'élément intermédiaire 91 et la partie 102 en position abaissée, ainsi que cela est connu pour ce type de levage entre le faux-châssis et la benne. Le vérin 101 pourrait également être remplacé par un compas à deux branches, dont une fixée au faux-châssis et l'autre articulée à la benne, les branches étant écartées ou rapprochées pour le levage ou l'abaissement de la benne.

Les éléments 51, 91 et 52 sont agencés de la manière suivante.

En position abaissée, la benne 4 repose par sa surface inférieure 41 sur les tronçons 55 et 56 et les deux extrémités droite et gauche 65, 66 du tube 62 de l'élément arrière 52, sur la plaque 57 de l'élément avant 51, par exemple sur ses deux côtés longitudinaux 58 droit et gauche, et sur l'élément intermédiaire 91, par exemple sur ses tronçons 93 et 94. En position abaissée, mis à part l'axe 6, la benne ne touche par exemple que les tronçons précités 55 et 56 de l'élément 52, les côtés 58 de l'élément 51, et les tronçons précités 93 et 94 de l'élément 91.

Lorsque le vérin 101 est actionné depuis la position abaissée, la benne 4 tourne vers l'arrière autour de l'axe 61 de rotation par rapport à l'élément arrière 52 pour passer en position haute, la partie inférieure avant 49 de la benne 4 est soulevée de l'élément avant 51, la partie inférieure de la benne, intermédiaire entre ses parties 45 et 49, est soulevée des tronçons 93 et 94 et la partie arrière basse 45 de la surface inférieure de contact 41 de la benne 4 est soulevée des tronçons 55 et 56, la partie arrière 45 de la benne 4 ne reposant plus que par les axes 63 et 64 sur l'élément arrière 52. Bien entendu, la benne 4 peut passer de la position haute à la position abaissée par un actionnement en sens inverse du vérin 101.

On va maintenant décrire l'invention ci-dessous pour une benne pouvant basculer soit d'avant en arrière et vice versa comme la benne à basculement arrière simple décrite ci-dessous, soit latéralement sur un côté droit ou gauche, cette benne étant appelée bi-benne.

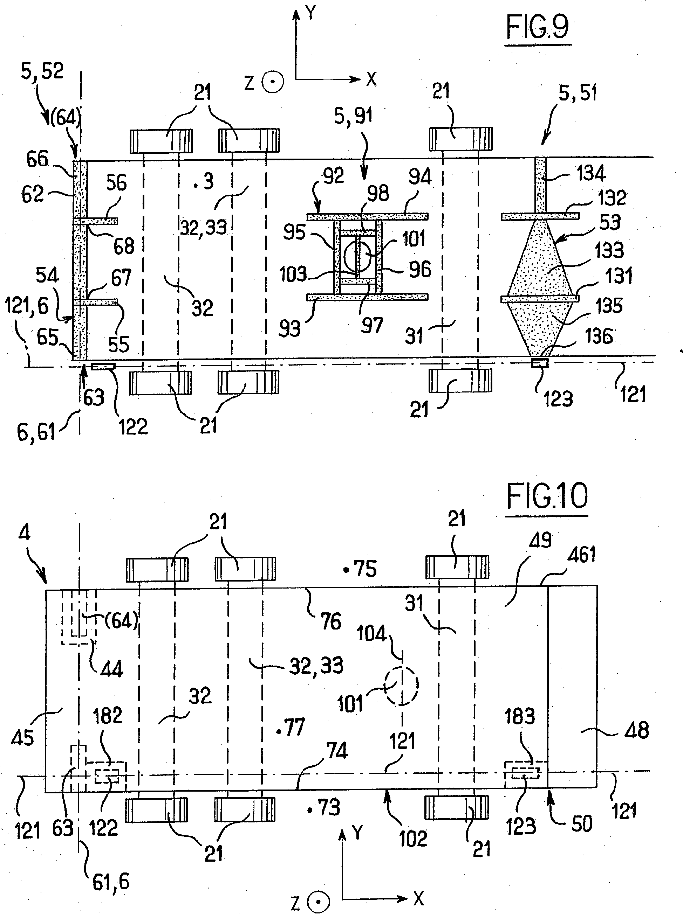

Dans un quatrième mode de réalisation représenté aux figures 9, 10, 11 et 12, qui est une variante du troisième mode de réalisation, on suppose que le basculement latéral de la benne 4 est effectué autour d'un axe 121 de rotation à droite.

A cet effet, l'articulation 6 sur le deuxième élément arrière 52 de faux-châssis comporte en plus un axe 122 longitudinal de rotation prévu du côté droit de celui-ci.

L'axe 121 de rotation latéral est formé par le premier axe 122 sur l'élément arrière 52 et un deuxième axe 123 sur l'élément avant 51, le deuxième axe 123 étant aligné avec le premier axe 122 et étant distant de celui-ci. Pour le basculement à droite, le deuxième axe 123 est apte à être relié à rotation à un doigt correspondant 183 fixé sous la partie avant basse 49 de la benne 4, à droite de celle-ci.

L'articulation 6 est par exemple du type à cardan sur le deuxième élément arrière 52 de faux-châssis, ce cardan comportant comme axes, l'axe 63 pour le basculement arrière et le premier axe 122 pour le basculement latéral à droite, le premier axe 122 étant engagé à rotation latérale dans un doigt 182 fixé sous la partie arrière basse 45 de la benne 4, à droite de celle-ci.

Afin de mieux résister aux efforts de levage longitudinaux dans le cas du basculement de la benne vers l'arrière et aux efforts de levage transversaux dans le cas du basculement de la benne vers la droite, l'élément avant a la forme décrite ci-dessous. L'élément avant 51 est formé par deux tronçons longitudinaux droit et gauche 131 et 132 reliés entre eux par une partie intermédiaire trapézoïdale 133, par exemple isocèle, dont la petite base est située sur le tronçon gauche 132 éloigné de l'axe 121 de rotation latéral droit, et dont la grande base est située sur le tronçon droit 131 proche de l'axe 121 de rotation latéral droit. La partie intermédiaire trapézoïdale 133 est prolongée au-delà du tronçon 132 éloigné de l'axe 121 de rotation latéral droit par une partie rectangulaire 134. Une partie latérale trapézoïdale 135, par exemple isocèle, prolonge par sa grande base le tronçon 131 proche de l'axe 121 de rotation latéral droit. La petite base 136 de la partie latérale trapézoïdale 135, qui constitue l'extrémité de droite de l'élément avant 51, sert à porter le deuxième axe 123 de l'élément avant 51. Plus généralement, en étant trapézoïdales ou non, les parties 133 et 135 vont en se rétrécissant à partir du tronçon 131 vers le tronçon 132 et l'extrémité 136, afin de gagner en matière de faux-châssis et en poids de celui-ci, tout en ayant une structure optimisée pour le levage, l'abaissement et le soutien de la benne 4.

En position abaissée, la benne 4 repose par sa surface inférieure 41 sur les éléments 51, 52 par les tronçons 55, 56, 131 et 132 et sur l'élément intermédiaire 91, par exemple sur ses tronçons 93 et 94. En position abaissée, mis à part l'axe 121, la benne ne touche par exemple que les tronçons précités 55, 56, 131 et 132, et les tronçons précités 93 et 94 de l'élément 91.

Dans le quatrième mode de réalisation, les moyens de levage et d'abaissement de la benne 4 sont ceux du troisième mode de réalisation et l'élément intermédiaire 91 supportant ceux-ci est prévu.

Pour faire basculer la benne 4 à droite, on désolidarise du tube 62 l'axe 64 de gauche servant au basculement arrière et on le monte sur la l'extrémité 136 de droite de l'élément avant 51 pour former le deuxième axe 123 de l'élément avant 51, le signe de référence 64 étant alors mis entre parenthèse aux figures 9 et 10 pour indiquer qu'il n'est plus dans le doigt 64 mais dans le doigt 183. L'extrémité 136, la partie 135 ou l'élément avant 51 comportent à demeure des moyens de montage adaptés de cet axe 64 pour former l'axe 123 de rotation avec la benne 4. Puis on actionne les moyens de levage décrits dans le troisième mode de réalisation (vérin 101 ou compas), articulés d'une part à l'élément intermédiaire 91 et d'autre part à la partie inférieure 102 de la benne 4, ce qui soulève la partie gauche de la benne 4, par rotation autour de l'axe 121.

Lorsque les moyens de levage sont actionnés depuis la position abaissée, la benne 4 tourne vers la droite autour de l'axe 121 de rotation latéral de droite par rapport à l'élément arrière 52 et à l'élément avant 51 pour passer en position haute de sa partie gauche, afin de permettre le vidage des matériaux contenus dans la benne 4 à droite du camion 1, par un passage prévu à cet effet dans la paroi de droite de la benne 4. La surface inférieure 41 de la benne 4 est soulevée de l'élément avant 51, de l'élément arrière 52 et de l'élément intermédiaire 91, la partie inférieure de droite de la benne 4 ne reposant plus que par les axes 122 et 123 sur l'élément arrière 52 et l'élément avant 51. Bien entendu, la benne 4 peut passer de la position haute à la position abaissée par un actionnement en sens inverse des moyens de levage. Une fois la position abaissée de la benne 4 atteinte, l'axe 64 peut être démonté de l'extrémité 136 et monté sur l'extrémité 64 du tube 62 pour servir au basculement arrière.

Bien entendu, l'axe 121 de rotation pourrait être à gauche au lieu d'être à droite, pour un basculement à gauche de la benne 4, les adjectifs droit et gauche devant dans ce cas être permutés dans le quatrième mode de réalisation.

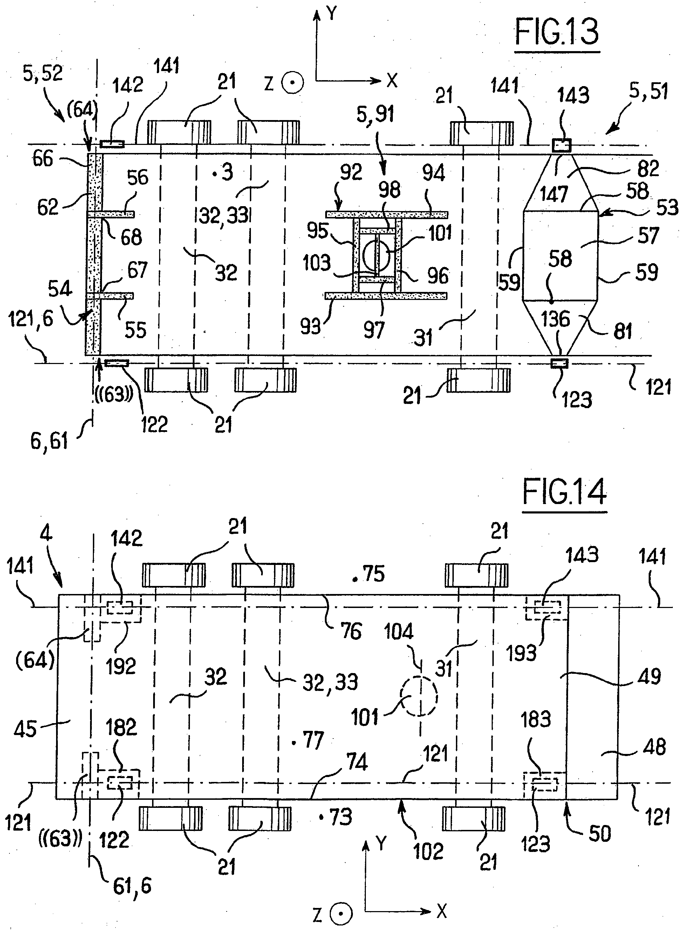

On va maintenant décrire l'invention ci-dessous pour une benne pouvant basculer soit d'avant en arrière et vice versa comme la benne à basculement arrière simple décrite ci-dessous, soit latéralement sur le côté droit, soit latéralement sur le côté gauche, cette benne étant appelée tribenne, dans un cinquième mode de réalisation représenté aux figures 13 et 14, qui est un perfectionnement du quatrième mode de réalisation.

Pour que le basculement latéral de la benne 4 puisse être effectué autour d'un axe 141 de rotation à gauche, l'articulation 6 sur le deuxième élément arrière 52 de faux-châssis comporte en plus un axe 142 longitudinal de rotation prévu du côté gauche de celui-ci.

L'axe 141 de rotation latéral est formé par le premier axe 142 sur l'élément arrière 52 et un deuxième axe 143 sur l'élément avant 51, le deuxième axe 143 étant aligné avec le premier axe 142 et étant distant de celui-ci. Pour le basculement à gauche, le deuxième axe 143 est apte à être relié à rotation à un doigt correspondant 193 fixé sous la partie avant basse 49 de la benne 4, à gauche de celle-ci.

L'articulation 6 est par exemple du type à deux cardans sur le deuxième élément arrière 52 de faux-châssis, avec un premier cardan droit comportant comme axes, l'axe 63 pour le basculement arrière et le premier axe 122 pour le basculement latéral à droite, le premier axe 122 étant engagé à rotation latérale dans un doigt 182 fixé sous la partie arrière basse 45 de la benne 4, à droite de celle-ci, et un deuxième cardan gauche comportant comme axes, l'axe 64 pour le basculement arrière et le premier axe 142 pour le basculement latéral à gauche, le premier axe 142 étant engagé à rotation latérale dans un doigt 192 fixé sous la partie arrière basse 45 de la benne 4, à gauche de celle-ci. Les axes 63 et 64 sont aptes à être enlevés des premier et deuxième cardans.

Afin de mieux résister aux efforts de levage longitudinaux dans le cas du basculement de la benne vers l'arrière et aux efforts de levage transversaux dans le cas du basculement de la benne vers la droite et dans le cas du basculement de la benne vers la gauche, l'élément avant 51 a la forme décrite dans le deuxième mode de réalisation. Un élément avant 51 ayant la forme décrite dans le deuxième mode de réalisation pourrait également être prévue dans le quatrième mode de réalisation. Dans le cinquième mode de réalisation, l'élément avant 51 comprend, en plus de la plaque 57, deux parties 81 et 82 droite et gauche solidaires respectivement des deux côtés longitudinaux 58 droit et gauche de la plaque 57. Ces parties 81 et 82 sont par exemple trapézoïdales et isocèles, prolongent par leur grande base chacune les deux côtés longitudinaux 58 droit et gauche de la plaque 57 et forment par leur petite base 136 et 147 les extrémités droite et gauche de l'élément 51. Plus généralement, en étant trapézoïdales ou non, les parties 81 et 82 vont en se rétrécissant de la plaque 57 vers les extrémités 136 et 147, afin de gagner en matière de faux-châssis et en poids de celui-ci, tout en ayant une structure optimisée pour le levage, l'abaissement et le soutien de la benne 4.

Comme la partie latérale trapézoïdale 135 dans le quatrième mode de réalisation, la partie 81 sert à porter le deuxième axe 123 de l'élément avant 51 et la partie 82 sert à porter le deuxième axe 143.

Pour faire basculer la benne 4 à droite, on procède comme cela est décrit dans le quatrième mode de réalisation.

Pour faire basculer la benne 4 à gauche, on désolidarise du tube 62 l'axe 63 de gauche servant au basculement arrière et on le monte sur l'extrémité 147 de gauche de l'élément avant 51 pour former le deuxième axe 143 de gauche de l'élément avant 51, le signe de référence 63 étant alors mis en double parenthèses aux figures 13 et 14 pour indiquer qu'il n'est plus dans le premier cardan 63, 122 mais dans le doigt 193. L'extrémité 147, la partie 82 ou l'élément avant 51 comportent à demeure des moyens de montage adaptés de cet axe 63 pour former l'axe 141 de rotation avec la benne 4. Puis on actionne les moyens de levage décrits dans le troisième mode de réalisation (vérin 101 ou compas), articulés d'une part à l'élément intermédiaire 91 et d'autre part à la partie inférieure 102 de la benne 4, ce qui soulève la partie droite de la benne 4, par rotation autour de l'axe 141.

Dans les modes de réalisation décrits ci-dessus, le deuxième élément arrière 52 de faux-châssis peut comporter un crochet 150 de remorquage en son milieu transversal arrière.

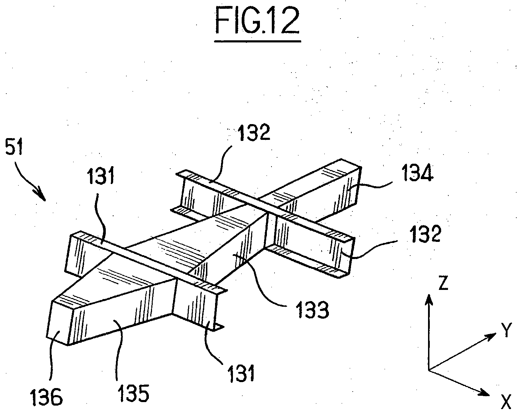

En outre, les éléments du faux-châssis sont rigides et par exemple métalliques. Les tronçons et les côtés 58 des éléments de faux châssis sont par exemple formés de tronçons de poutres profilées en C. Par exemple, à la figure 11, ne montrant que les éléments 51, 52 et 91 sans les axes et sans vérin du quatrième mode de réalisation, les tronçons 55 et 56 sont des poutres profilées en C se regardant, de même que les tronçons 131 et 132. Les tronçons 93 et 94, les traverses 95 et 96, les poutres longitudinales 97 et 98 sont chacune également des poutres profilées en C, se tournant le dos. La partie rectangulaire 134 est une poutre profilée creuse de section rectangulaire ou carrée. La figure 12 représente en perspective l'élément avant 51 selon la figure 11 ayant un profil caissonné carré. Le tube 62 a par exemple un diamètre extérieur de 121 mm pour une épaisseur de 12,5 mm et une largeur transversale de 1870 mm. La partie 133 et la partie 135 ont par exemple un profil transversal rectangulaire creux. Par exemple, extérieurement, la grande base de la partie 133 et de la partie 135 fait 300 mm de long sur 160 mm de haut; la petite base 136 de la partie 135 et le profil transversal rectangulaire creux de la partie 134 font 100 mm de long sur 160 mm de haut. Les tronçons 93, 94, 55, 56, 131, 132 ont une section en C à angles droits de 160 mm de hauteur et 65 mm de largeur transversale.

Cette structure des éléments 51, 52 et 91 permet de supporter 20 tonnes de charge utile et le poids de la benne, autorise le basculement de la benne latéralement (à droite) et le basculement de la benne en arrière, optimise le poids et améliore les conditions de travail de la structure.

## Revendications

1. Dispositif de montage d'une benne (4) sur un châssis roulant, comportant un faux-châssis (5) de repos de la benne (4) en position abaissée, sur lequel sont montés
- au moins une articulation (6) de la benne (4) entre l'une et l'autre de la position abaissée et d'une position levée, et
- des moyens de levage et d'abaissement de la benne, et
- des moyens (53, 54, 92) de fixation du faux-châssis (5) sur le châssis (3),
le faux-châssis (5) comportant au moins un premier élément avant (51) de faux-châssis servant au repos d'une partie avant (49) de la benne (4) en position abaissée,
des premiers moyens (53) de fixation du premier élément avant (51) de faux-châssis au châssis (3) étant prévus,
**caractérisé en ce que**
le faux-châssis (5) est constitué dudit premier élément avant (51) de faux-châssis et d'un deuxième élément arrière (52) de faux-châssis servant à supporter une partie arrière (45) de la benne (4) en position abaissée et au moins un axe (61) de l'articulation (6),
le premier élément avant (51) de faux-châssis se trouvant à distance du deuxième élément arrière (52) de faux-châssis,
des deuxièmes moyens (54) de fixation du deuxième élément arrière (52) de faux-châssis au châssis (3), indépendants des premiers moyens (53) de fixation, étant prévus,
les moyens (7, 71, 72) de levage et d'abaissement de la benne étant supportés sur le premier élément avant (51) de faux-châssis.

2. Dispositif de montage suivant la revendication 1, **caractérisé en ce que** l'élément avant (51) de faux-châssis est positionné devant le ou les essieux (32) arrière du châssis (3).

3. Dispositif de montage suivant l'une quelconque des revendications précédentes, **caractérisé en ce que** l'élément avant (51) de faux-châssis comporte comme moyens de support de ladite partie avant (49) de la benne (4) une plaque médiane (57) dont les côtés (58) droit et gauche servent de support à ladite partie avant (49) de la benne (4).

4. Dispositif de montage suivant l'une quelconque des revendications précédentes, **caractérisé en ce que** l'articulation (6) comporte, sur le deuxième élément arrière (52) de faux-châssis, au moins un axe transversal (61) de rotation pour le basculement de la benne (4) vers l'arrière lors de son passage entre la position abaissée et la position levée et pour le basculement de la benne (4) vers l'avant lors de son passage entre la position levée et la position abaissée.

5. Dispositif de montage suivant la revendication 4, **caractérisé en ce que** les premiers moyens (71, 72) de levage et d'abaissement sont supportés sur deux côtés (83, 84) opposés droit et gauche du premier élément avant (51) de faux-châssis pour agir sur deux côtés (73, 75) droit et gauche de la benne (4).

6. Dispositif de montage suivant la revendication 5, **caractérisé en ce que** les moyens (71, 72) de levage et d'abaissement sont supportés sur deux côtés (83, 84) opposés droit et gauche du premier élément avant (51) de faux-châssis pour agir sur deux côtés supérieurs (73, 75) droit et gauche de la benne (4).

7. Dispositif de montage suivant les revendications 3 et 6, **caractérisé en ce que** le premier élément avant (51) de faux-châssis comporte comme points d'appui des moyens (71, 72) de levage et d'abaissement les extrémités droite et gauche (83, 84) de deux parties (81, 82) de raccordement des extrémités droite et gauche (83, 84) aux côtés (58) droit et gauche de la plaque (57), lesdites parties (81, 82) de raccordement ayant une longueur, prise dans la direction allant de l'arrière vers l'avant, qui se rétrécit desdits côtés droit et gauche de la plaque médiane (57) aux extrémités droite et gauche (83, 84).

8. Dispositif de montage suivant la revendication 1, **caractérisé en ce que** les moyens (7) de levage et d'abaissement sont supportés sur une partie (701) du premier élément avant (51) de faux-châssis, médiane par rapport à la benne (4) dans le sens transversal pour agir au milieu transversal d'un côté avant (47) de la benne (4).

9. Dispositif de montage suivant l'une quelconque des revendications précédentes, **caractérisé en ce qu'**il comprend des moyens amovibles (111, 112) de liaison mécanique du premier élément avant (51) de faux-châssis avec le deuxième élément arrière (52) de faux-châssis pour aider au maintien de la distance entre eux.

10. Dispositif de montage suivant la revendication 9, **caractérisé en ce que**, lorsqu'ils sont fixés au premier élément avant (51) de faux-châssis et au deuxième élément arrière (52) de faux-châssis, les moyens amovibles (111, 112) de liaison mécanique sont agencés pour ne pas être touchés par la benne (4), ni toucher au châssis.

11. Dispositif de montage suivant l'une quelconque des revendications 1 à 4, **caractérisé en ce que** le faux-châssis (5) comporte, entre le premier élément avant (51) de faux-châssis et le deuxième élément arrière (52) de faux-châssis et à distance de ceux-ci, un troisième élément intermédiaire (91) de faux-châssis,
des troisièmes moyens (92) de fixation du troisième élément intermédiaire (91) de faux-châssis au châssis (3), indépendants des premiers moyens (53) de fixation et des deuxièmes moyens (54) de fixation, étant prévus,
les moyens (101) de levage et d'abaissement de la benne (4) par rapport à l'articulation (6) étant supportés sur le troisième élément intermédiaire (91) de faux-châssis au lieu d'être supportés sur le premier élément avant (51) de faux-châssis.

12. Dispositif de montage suivant la revendication 11, **caractérisé en ce que** les moyens (101) de levage et d'abaissement sont supportés sur une partie (701) du troisième élément intermédiaire (91) de faux-châssis, médiane par rapport à la benne (4) dans le sens transversal pour agir en un milieu transversal (104) de la partie inférieure (102) de la benne (4).

13. Dispositif de montage suivant la revendication 11 ou 12, lorsqu'elle dépend de la revendication 3 ou de la revendication 4 en combinaison avec la revendication 3, **caractérisé en ce que** le troisième élément intermédiaire (91) de faux-châssis comporte, comme moyens de support de la benne (4) en position abaissée, deux tronçons intermédiaires (93, 94) droit et gauche alignés avec les deux côtés (58) droit et gauche de la plaque (57) de l'élément avant (51) de faux-châssis.

14. Dispositif de montage suivant l'une quelconque des revendications précédentes, **caractérisé en ce que** l'articulation (6) comporte, sur le deuxième élément arrière (52) de faux-châssis, au moins un axe longitudinal (121, 141) prévu au moins d'un côté droit ou gauche (65, 66) de celui-ci pour le basculement latéral de la benne (4) vers ce coté lors de son passage entre la position abaissée et la position levée et pour le basculement latéral de la benne (4) depuis ce côté lors de son passage entre la position levée et la position abaissée.

15. Dispositif de montage suivant la revendication 14 et suivant la revendication 4, **caractérisé en ce que** l'articulation (6) comprend, pour chaque axe (121, 141) longitudinal de basculement latéral sur le deuxième élément arrière (52) de faux-châssis, au moins un cardan dont les deux axes sont formés par ledit axe transversal (61) de celui-ci et ledit axe longitudinal (121, 141) de celui-ci.

16. Dispositif de montage suivant la revendication 15, **caractérisé en ce que** le deuxième élément arrière (52) de faux-châssis comprend pour former ledit axe (61) transversal de rotation de la benne (4) au moins deux axes (63, 64) mécaniques distants l'un de l'autre et alignés l'un avec l'autre,
celui des deux axes (64, 63) mécaniques destinés à former ledit axe (61) transversal de rotation, autre que l'axe mécanique (63, 64) appartenant au cardan par lequel passe ledit axe longitudinal (121, 141) de basculement latéral, étant démontable pour être monté sur le premier élément avant (51) de faux-châssis afin de former ledit axe longitudinal (121, 141) de basculement latéral en coopération avec ledit cardan par lequel cet axe longitudinal (121, 141) passe.

17. Dispositif de montage suivant l'une quelconque des revendications 14 à 16, **caractérisé en ce qu'**un seul axe (121, 141) longitudinal droit ou gauche de basculement latéral est prévu,
le premier élément avant (51) de faux-châssis comporte deux tronçons (131, 132) droit et gauche de support de ladite partie avant (49) de la benne (4), une partie (135) de raccordement du premier tronçon (131) de support, situé dudit côté droit ou gauche de l'axe longitudinal (121, 141) de basculement latéral, à une extrémité (136) de support d'un axe mécanique (123) destiné à former ledit axe longitudinal (121, 141) de basculement latéral, ladite partie (135) de raccordement ayant une longueur, prise dans la direction allant de l'arrière vers l'avant, qui se rétrécit dudit premier tronçon (131) de support, à ladite extrémité (136) de support de l'axe mécanique (123),
et le premier élément avant (51) de faux-châssis comporte en outre une autre partie (133) de raccordement du deuxième tronçon (132) de support, éloigné dudit côté droit ou gauche de l'axe longitudinal (121, 141) de basculement latéral, au premier tronçon (131) de support, ladite autre partie (133) de raccordement ayant une longueur, prise dans la direction allant de l'arrière vers l'avant, qui se rétrécit dudit premier tronçon (131) de support, audit deuxième tronçon (132) de support.

18. Dispositif de montage suivant l'une quelconque des revendications 14 à 17, **caractérisé en ce que** l'articulation (6) comporte au moins un axe longitudinal (121) dudit côté droit et au moins un axe longitudinal (141) dudit côté gauche pour lesdits basculements latéraux de la benne (4) par rapport à l'un ou l'autre de ces axes longitudinaux droit et gauche vers lesdits côtés respectifs.

19. Dispositif de montage suivant la revendication 18, **caractérisé en ce que** l'élément avant (51) de faux-châssis comporte comme moyens de support de ladite partie avant (49) de la benne (4) une plaque médiane (57) dont les côtés (58) droit et gauche servent de support à ladite partie avant (49) de la benne (4),
le premier élément avant (51) de faux-châssis comporte comme points d'appui des axes longitudinaux (121, 141) de basculement latéral, les extrémités droite et gauche (136, 147) de deux parties (81, 82) de raccordement desdites extrémités droite et gauche (136, 137) aux côtés (58) droit et gauche de la plaque (57),
lesdites parties (81, 82) de raccordement ayant une longueur, prise dans la direction allant de l'arrière vers l'avant, qui se rétrécit desdits côtés droit et gauche (58) de la plaque médiane (57) aux extrémités droite et gauche (136, 137).

20. Dispositif de montage suivant l'une quelconque des revendications précédentes, **caractérisé en ce que** le deuxième élément arrière (52) de faux-châssis comporte un crochet de remorquage.

21. Dispositif de montage suivant l'une quelconque des revendications précédentes, **caractérisé en ce que** les éléments de faux-châssis sont distincts de ladite articulation (6).

22. Camion comportant une benne (4) basculante, un châssis (3) roulant et un dispositif de montage de la benne (4) sur le châssis (3) suivant l'une quelconque des revendications précédentes.

## Patentansprüche

1. - Vorrichtung zur Montage eines Kippbehälters (4) auf einen Fahrzeugrahmen, mit einem Hilfsrahmen (5) für die Ruhestellung des Kippbehälters (4) in abgesenkter Position, auf den folgendes montiert ist:
- mindestens ein Gelenk (6) des Kippbehälters (4) zwischen der abgesenkten und einer angehobenen Position sowie
- Mittel zum Anheben und Absenken des Kippbehälters, sowie
- Mittel (53, 54, 92) zur Befestigung des Hilfsrahmens (5) auf dem Fahrgestell (3),
wobei der Hilfsrahmen (5) mindestens ein erstes vorderes Element (51) des Hilfsrahmens umfasst, das zur Ruhestellung eines Vorderteils (49) des Kippbehälters (4) in abgesenkter Position dient,
wobei erste Mittel (53) zur Befestigung des ersten vorderen Elements (51) des Hilfsrahmens am Fahrgestell (3) vorgesehen sind,
**gekennzeichnet dadurch dass**
der Hilfsrahmen (5) aus dem genannten ersten vorderen Element (51) des Hilfsrahmens und aus einem zweiten hinteren Element (52) des Hilfsrahmens besteht, um einen hinteren Teil (45) des Kippbehälters (4) in abgesenkter Position zu stützen, und mindestens einer Achse (61) des Gelenks (6),
wobei das erste vordere Element (51) des Hilfsrahmens von dem zweiten hinteren Element (52) des Hilfsrahmens beabstandet ist,
wobei zweite Mittel (54) zur Befestigung des zweiten hinteren Elements (52) des Hilfsrahmens am Fahrgestell (3) vorgesehen sind, die unabhängig von den ersten Befestigungsmitteln (53) sind,
wobei die Mittel (7, 71, 72) zum Anheben und Absenken des Kippbehälters auf das erste vordere Element (51) des Hilfsrahmens gestützt sind.

2. - Montagevorrichtung nach Anspruch 1, **gekennzeichnet dadurch, dass** das vordere Element (51) des Hilfsrahmens vor der oder den hinteren Achse (n) (32) des Fahrgestells (3) positioniert ist.

3. - Montagevorrichtung nach einem beliebigen der vorherigen Ansprüche, **gekennzeichnet dadurch, dass** das vordere Element (51) des Hilfsrahmens als Stützmittel für das Vorderteil (49) des Kippbehälters (4) eine mittlere Platte (57) umfasst, deren rechte und linke Seite (58) als Stütze für das Vorderteil (49) des Kippbehälters (4) dienen.

4. - Montagevorrichtung nach einem beliebigen der vorherigen Ansprüche, **gekennzeichnet dadurch, dass** das Gelenk (6) auf dem zweiten hinteren Element (52) des Hilfsrahmens mindestens eine Rotations-Querachse (61) umfasst, zum Kippen des Kippbehälters (4) nach hinten bei seinem Durchgang zwischen der abgesenkten und der angehobenen Position und zum Kippen des Kippbehälters (4) nach vorn bei seinem Durchgang zwischen der angehobenen und der abgesenkten Position.

5. - Montagevorrichtung nach Anspruch 4, **gekennzeichnet dadurch, dass** die ersten Mittel (71, 72) zum Anheben und Absenken auf zwei gegenüberliegende Seiten (83, 84), nämlich die rechte und die linke, des ersten vorderen Element (51) des Hilfsrahmens gestützt sind, um auf die rechte und linke Seite (73, 75) des Kippbehälters (4) einzuwirken.

6. - Montagevorrichtung nach Anspruch 4, **gekennzeichnet dadurch, dass** die Mittel (71, 72) zum Anheben und Absenken auf zwei gegenüberliegende Seiten (83, 84), nämlich die rechte und die linke, des ersten vorderen Element (51) des Hilfsrahmens gestützt sind, um auf die rechte und linke obere Seite (73, 75) des Kippbehälters (4) einzuwirken.

7. - Montagevorrichtung nach den Patentansprüchen 3 und 6, **gekennzeichnet dadurch, dass** das erste vordere Element (51) des Hilfsrahmens als Auflagepunkte Mittel (71, 72) zum Anheben und Absenken des rechten und linken Endes (83, 84) von zwei Teilen (81, 82) zur Verbindung des rechten und linken Endes (83, 84) an der rechten und linken Seite (58) der Platte (57), wobei die Teile (81, 82) zur Verbindung eine Länge aufweisen, in der Richtung von der Hinterseite nach vorn, die sich von der rechten und linken Seite der mittleren Platte (57) zu dem rechten und linken Ende (83, 84) hin verengt.

8. - Montagevorrichtung nach Anspruch 1, **gekennzeichnet dadurch, dass** die Mittel (7) zum Anheben und Absenken auf ein Teil (701) des ersten vorderen Elements (51) des Hilfsrahmens gestützt sind, das zentral im Vergleich zu dem Kippbehälter (4) in Querrichtung ist, um in der Quermitte einer vorderen Seite (47) des Kippbehälters (4) zu wirken.

9. - Montagevorrichtung nach einem beliebigen der vorherigen Ansprüche, **gekennzeichnet dadurch, dass** sie abnehmbare Mittel (111, 112) zur mechanischen Verbindung des ersten vorderen Elements (51) des Hilfsrahmens mit dem zweiten hinteren Element (52) des Hilfsrahmens umfasst, um das Halten des Abstandes voneinander zu unterstützen.

10. - Montagevorrichtung nach Anspruch 9, **gekennzeichnet dadurch, dass**, wenn sie an dem ersten vorderen Element (51) des Hilfsrahmens und dem zweiten hinteren Element (52) des Hilfsrahmens befestigt sind, die abnehmbaren Mittel (111, 112) zur mechanischen Verbindung so angeordnet sind, dass sie nicht vom Kippbehälter (4) berührt werden und auch nicht das Fahrgestell berühren.

11. - Montagevorrichtung nach einem beliebigen der Ansprüche 1 bis 4, **gekennzeichnet dadurch, dass** der Hilfsrahmen (5) zwischen dem ersten vorderen Element (51) des Hilfsrahmens und dem zweiten hinteren Element (52) des Hilfsrahmens und beabstandet von diesen ein drittes Zwischenelement (91) des Hilfsrahmens umfasst,
wobei dritte Mittel (92) zur Befestigung des dritten Zwischenelements (91) des Hilfsrahmens am Fahrgestell (3) vorgesehen sind, die unabhängig von den ersten Befestigungsmitteln (53) und den zweiten (54) Befestigungsmitteln sind.
wobei die Mittel (101) zum Anheben und Absenken des Kippbehälters (4) im Vergleich zu dem Gelenk (6) auf das dritte Zwischenelement (91) des Hilfsrahmens gestützt sind anstatt auf das erste vordere Element (51) des Hilfsrahmens.

12. - Montagevorrichtung nach Anspruch 1, **gekennzeichnet dadurch dass** die Mittel (101) zum Anheben und Absenken auf ein Teil (701) des dritten Zwischenelements (91) des Hilfsrahmens gestützt sind, das zentral im Vergleich zu dem Kippbehälter (4) in Querrichtung ist, um in einer Quermitte (104) des Unterteils (102) des Kippbehälters (4) zu wirken.

13. - Montagevorrichtung nach Anspruch 11 oder 12, wenn er von Anspruch 3 abhängt oder von Anspruch 4 in Kombination mit Anspruch 3, **gekennzeichnet dadurch, dass** das dritte Zwischenelement (91) des Hilfsrahmens als Stützmittel des Kippbehälters (4) in abgesenkter Position zwei Zwischenabschnitte (93, 94) umfasst, einen rechten und einen linken, die mit der rechten und linken Seite (58) der Platte (57) des vorderen Elements (51) des Hilfsrahmens ausgerichtet sind.

14. - Montagevorrichtung nach einem beliebigen der vorherigen Ansprüche, **gekennzeichnet dadurch dass** das Gelenk (6) auf dem zweiten hinteren Element (52) des Hilfsrahmens mindestens eine Längsachse (121, 141) an mindestens einer rechten oder linken Seite (65, 66) von dieser umfasst, zum seitlichen Kippen des Kippbehälters (4) zu dieser Seite hin bei seinem Durchgang zwischen der abgesenkten und der angehobenen Position und zum seitlichen Kippen des Kippbehälters (4) von dieser Seite aus bei seinem Durchgang zwischen der angehobenen und der abgesenkten Position.

15. - Montagevorrichtung nach Anspruch 14 und nach Anspruch 4, **gekennzeichnet dadurch, dass** das Gelenk (6) für jede seitliche Längs-Kippachse (121, 141) auf dem zweiten hinteren Element (52) des Hilfsrahmens mindestens eine Kardanwelle umfasst, deren beide Achsen von der Querachse (61) hiervon und der Längsachse (121, 141) hiervon gebildet werden.

16. - Montagevorrichtung nach Anspruch 15, **gekennzeichnet dadurch dass** das zweite hintere Element (52) des Hilfsrahmens zur Bildung der Quer-Rotationsachse (61) des Kippbehälters (4) mindestens zwei mechanischen Achsen (63, 64) umfasst, die voneinander beabstandet und miteinander ausgerichtet sind,
wobei diejenige der beiden mechanischen Achsen (64, 63), die die Quer-Rotationsachse (61) bilden sollen, neben der mechanischen Achse (63, 64), die zur Kardanwelle gehört, durch die die seitliche Längs-Kippachse (121, 141) hindurchgeht, abmontierbar ist, um auf das erste vordere Element (51) des Hilfsrahmens montiert zu werden, um besagte seitliche Längs-Kippachse (121, 141) in Zusammenarbeit mit der Kardanwelle zu bilden, durch die diese Längsachse (121, 141) hindurchgeht.

17. - Montagevorrichtung nach einem beliebigen der Ansprüche 14 bis 16, **gekennzeichnet dadurch dass** eine einzige rechte oder linke seitliche Längs-Kippachse (121, 141) vorgesehen ist,
wobei das erste vordere Element (51) des Hilfsrahmens zwei Abschnitte (131, 132), einen rechten und einen linken, zur Abstützung des Vorderteils (49) des Kippbehälters (4) umfasst, ein Teil (135) zur Verbindung des ersten Stütz-Teilstücks (131), an der rechten oder linken Seite der seitlichen Längs-Kippachse (121, 141), an einem Ende (136) zur Abstützung einer mechanischen Achse (123), um die seitliche Längs-Kippachse (121, 141) zu bilden, wobei das Teil (135) zur Verbindung eine Länge aufweist, in der Richtung von der Hinterseite nach vorn, die sich vom ersten Stütz-Teilstück (131) bis zu besagtem Ende (136) zur Abstützung der mechanischen Achse (123) hin verengt,
und das erste vordere Element (51) des Hilfsrahmens umfasst außerdem ein anderes Teil (133) zur Verbindung des zweiten Stütz-Teilstücks (132), das von der rechten oder linken Seite der seitlichen Längs-Kippachse (121, 141) beabstandet ist, mit dem ersten Stütz-Teilstück (131), wobei das andere Teil (133) zur Verbindung eine Länge aufweist, in der Richtung von der Hinterseite nach vorn, die sich vom ersten Stütz-Teilstück (131) bis zum zweiten Stütz-Teilstück (132) hin verengt.

18. - Montagevorrichtung nach einem beliebigen der Ansprüche 14 bis 17, **gekennzeichnet dadurch, dass** das Gelenk (6) mindestens eine Längsachse (121) der genannten rechten Seite umfasst und mindestens eine Längsachse (141) der genannten linken Seite zum seitlichen Kippen des Kippbehälters (4) im Vergleich zu der rechten oder linken dieser Längsachsen zu den jeweiligen Seiten.

19. - Montagevorrichtung nach Anspruch 18, **gekennzeichnet dadurch, dass** das vordere Element (51) des Hilfsrahmens als Stützmittel für das Vorderteil (49) des Kippbehälters (4) eine mittlere Platte (57) umfasst, deren rechte und linke Seite (58) als Stütze für das Vorderteil (49) des Kippbehälters (4) dienen,
wobei das erste vordere Element (51) des Hilfsrahmens als Auflagepunkte der seitlichen Längs-Kippachsen (121, 141) das rechte und das linke Ende (136, 147) von zwei Teilen (81, 82) zur Verbindung des rechten und linken Endes (136, 137) mit der rechten und linken Seite (58) der Platte (57) umfasst,
wobei besagte Teile (81, 82) zur Verbindung eine Länge aufweisen, in der Richtung von der Hinterseite nach vorn, die sich von der genannten rechten und linken Seite (58) der mittleren Platte (57) zu dem rechten und linken Ende (136, 137) hin verengt.

20. - Montagevorrichtung nach einem beliebigen der vorherigen Ansprüche, **gekennzeichnet dadurch, dass** das zweite hintere Element (52) des Hilfsrahmens einen Abschlepphaken umfasst.

21. - Montagevorrichtung nach einem beliebigen der vorherigen Ansprüche, **gekennzeichnet dadurch, dass** die Elemente des Hilfsrahmens verschieden von besagtem Gelenk (6) sind.

22. - Lastwagen mit einem kippbaren Behälter (4), einem Fahrgestell (3) und einer Vorrichtung zur Montage des Kippbehälters (4) auf das Fahrgestell (3) nach einem beliebigen der vorherigen Ansprüche.

## Claims

1. - A device for mounting a dump bucket (4) on a rolling frame, comprising a sub-frame (5) for resting the dump bucket (4) in a lowered position, on which are mounted:
- at least one joint (6) of the dump bucket (4) between each one of the lowered position and a raised position, and
- means for raising and lowering the dump bucket, and
- means (53, 54, 92) for attaching the sub-frame (5) to the frame (3),
the sub-frame (5) comprising at least one first front member (51) of sub-frame serving to the resting of a front part (49) of the dump bucket (4) in the lowered position,
first means (53) for attaching the first front member (51) of sub-frame to the frame (3) being provided,
**characterized in that**
the sub-frame (5) is constituted by said first front member (51) of sub-frame and a second rear member (52) of sub-frame serving to support a rear part (45) of the dump bucket (4) in the lowered position and at least one axis (51) of the joint (6),
the first front member (51) of sub-frame being at a distance from the second rear member (52) of sub-frame,
second means (54) for attaching the second rear member (52) of sub-frame to the frame (3), independent from the first attaching means (53), being provided,
the means (7,71,72) for raising and lowering the dump bucket being supported on the first front member (51) of sub-frame.

2. - The mounting device according to claim 1, **characterized in that** the front member (51) of sub-frame is positioned in front of the rear axle(s) (32) of the frame (3).

3. - The mounting device according to any of the preceding claims, **characterized in that** the front member (51) of sub-frame comprises, as means for supporting said front part (49) of the dump bucket (4), a median plate (57) the right and left sides (58) of which serve as a support for said front part (49) of the dump bucket (4).

4. - The mounting device according to any of the preceding claims, **characterized in that** the joint (6) comprises, on the second rear member (52) of sub-frame, at least one rotation transverse axis (61) for the tipping of the dump bucket (4) rearwards when switching between the lowered position and the raised position and for the tipping of the dump bucket (4) frontwards when switching between the raised position and the lowered position.

5. - The mounting device according to claim 4, **characterized in that** the first raising and lowering means (71,72) are supported on two opposite right and left sides (83,84) of the first front member (51) of sub-frame to act on two right and left sides (73,75) of the dump bucket (4).

6. - The mounting device according to claim 5, **characterized in that** the raising and lowering means (71,72) are supported on two opposite right and left sides (83,84) of the first front member (51) of sub-frame to act on two right and left upper sides (73,75) of the dump bucket (4).

7. - The mounting device according to claims 3 and 6, **characterized in that** the first front member (51) of sub-frame comprises, as fulcrums for the raising and lowering means (71,72), the right and left ends (83,84) of two parts (81,82) for connecting the right and left ends (83,84) to the right and left sides (58) of the plate (57), said connecting parts (81,82) having a length, taken in the rear-front direction, which narrows from said right and left sides of the median plate (57) to the right and left ends (83,84).

8. - The mounting device according to claim 1, **characterized in that** the raising and lowering means (7) are supported on a part (701) of the first front member (51) of sub-frame, median with respect to the dump bucket (4) in the transverse direction to act on the transverse center of a front side (47) of the dump bucket (4).

9. - The mounting device according to any of the preceding claims, **characterized in that** it comprises removable means (111,112) for mechanically connecting the first front member (51) of sub-frame to the second rear member (52) of sub-frame to help to maintain the distance therebetween.

10. - The mounting device according to claim 9, **characterized in that**, when attached to the first front member (51) of sub-frame and to the second rear member (52) of sub-frame, the removable mechanical connecting means (111,112) are arranged so as not to be contacted by the dump bucket (4) and not to contact the frame.

11. - The mounting device according to any of claims 1 to 4, **characterized in that** the sub-frame (5) comprises, between the first front member (51) of sub-frame and the second rear member (52) of sub-frame and at a distance therefrom, a third middle member (91) of sub-frame,
third means (92) for attaching the third middle member (91) of sub-frame to the frame (3), independent from the first attaching means (53) and the second attaching means (54), being provided,
the means (101) for raising and lowering the dump bucket (4) with respect to the joint (6) being supported on the third middle member (91) of sub-frame instead of being supported on the first front member (51) of sub-frame.

12. - The mounting device according to claim 1, **characterized in that** the raising and lowering means (101) are supported on a part (701) of the third middle member (91) of sub-frame, which is median with respect to the bucket (4) in the transverse direction to act on the transverse center (104) of the lower part (102) of the dump bucket (4).

13. - The mounting device according to claim 11 or 12, when dependent on claim 3 or claim 4 in combination with claim 3, **characterized in that** the third middle member (91) of sub-frame comprises, as means for supporting the dump bucket (4) in the lowered position, two right and left middle sections (93,94) aligned with both right and left sides (58) of the plate (57) of the front member (51) of sub-frame.

14. - The mounting device according to any of the preceding claims, **characterized in that** the joint (6) comprises, on the second rear member (52) of sub-frame, at least one longitudinal axis (121,141) provided on at least the right or left side (65,66) thereof for the lateral tipping of the dump bucket (4) towards this side when switching between the lowered position and the raised position and for the lateral tipping of the dump bucket (4) from this side when switching between the raised position and the lowered position.

15. - The mounting device according to claim 14 and claim 4, **characterized in that** the joint (6) comprises, for each longitudinal axis (121,141) for lateral tipping, on the second rear member (52) of sub-frame, at least one gimbal both axes of which are formed by said transverse axis (61) thereof and said longitudinal axis (121,141) thereof.

16. - The mounting device according to claim 15, **characterized in that** the second rear member (52) of sub-frame comprises, for forming said transverse axis (61) for rotation of the dump bucket (4), at least two mechanical axes (63,64) spaced from each other and aligned with each other,
the one of both mechanical axes (64,63) being intended to form said rotation transverse axis (61), other than the mechanical axis (63,64) belonging to the gimbal through which said longitudinal axis ((121,141) for lateral tipping passes, being removable so as to be mounted on the first front member (51) of sub-frame so as to form said longitudinal axis (121,141) for lateral tipping in cooperation with said gimbal through which said longitudinal axis (121,141) passes.

17. - The mounting device according to any of claims 14 to 16, **characterized in that** only one right or left longitudinal axis (121,141) for lateral tipping is provided,
the first front member (51) of sub-frame comprises two right and left sections (131,132) for supporting said front part (49) of the dump bucket (4), a part (135) for connecting the first support section (131), located on said right or left side of the longitudinal axis (121,141) for lateral tipping, to an end (136) for supporting a mechanical axis (123) intended to form said longitudinal axis (121,141) for lateral tipping, said connecting part (135) having a length, taken in the rear-front direction, which narrows from said first support section (131) to said end (136) for supporting the mechanical axis (123),
and the first front member (51) of sub-frame further comprises another part (133) for connecting the second support section (132), spaced from said right or left side of the longitudinal axis (121,141) for lateral tipping, to the first support section (131), said other connecting part (133) having a length, taken in the rear-back direction, which narrows from said first support section (131) to said second support section (132).

18. - The mounting device according to any of claims 14 to 17, **characterized in that** the joint (6) comprises at least one longitudinal axis (121) on said right side and at least one longitudinal axis (141) on said left side for said lateral tippings of the dump bucket (4) with respect to either right and left longitudinal axes towards said respective sides.

19. - The mounting device according to claim 18, **characterized in that** the front member (51) of sub-frame comprises, as means for supporting said front part (49) of the dump bucket (4), a median plate (57) the right and left sides (58) of which serve as a support for said front part (49) of the dump bucket (4),
the first front member (51) of sub-frame comprises, as fulcrums for the longitudinal axes (121,141) for lateral tipping, the right and left ends (136,147) of two parts (81,82) for connecting said right and left ends (136,137) to the right and left sides (58) of the plate (57).
said connecting parts (81,82) having a length, taken in the rear-front direction, which narrows from said right and left sides (58) of the median plate (57) to the right and left ends (136,137).

20. - The mounting device according to any of the preceding claims, **characterized in that** the second rear member (52) of sub-frame comprises a towing hook.

21. - The mounting device according to any of the preceding claims, **characterized in that** the members of sub-frame are separate from said joint (6).

22. - A lorry comprising a tipping dump bucket (4), a rolling frame (3) and a device for mounting the dump bucket (4) on the frame (3) according to any of the preceding claims.
